# EUROPEAN PATENT APPLICATION

(11) **EP 1 696 361 A1**
(43) Date of publication of application: **30.08.2006**
(21) Application number: 06251008.6
(22) Date of filing: 24.02.2006
(51) Int. Cl.: G06F 21/00

(54) **Memory management software, print control device, and memory management method of print control device**

(30) Priority: 25.02.2005 GB 0503974
(71) Applicant: CANON EUROPA N.V., NL-1185 XB Amstelveen (NL)
(72) Inventor: Atobe, Hiroshi, Richmond, Surrey TW10 6UT (GB); Takahashi, Kenji, Ealing, London W5 3QD (GB)
(74) Representative: Burt, Matthew Thomas

(57) **Abstract**

A memory management software is executed in print control device connectable via a network to an information processing device that sends an instruction and data thereto. The software includes: a step of receiving an activation code from a detachable memory connected to the print control device; a step of activating an application software installed in the print control device in case that the activation code in the memory corresponds with an activation code stored in a data file installed in the print control device; wherein the print control device is able to access to the memory by activating the application software.

## Description

### BACKGROUND OF THE INVENTION

### Field of the Invention

The present invention relates to a print control device connectable via a network to an information processing device that sends an instruction and data thereto and the information processing device connectable via the network to the print control device that receives an instruction and data therefrom.

### Description of the Related Art

Many varieties of memory stick go on sale in the world, USB (Universal Serial Bus) memory, SD (Secure Digital) card and CF (Compact Flash) card etc. A user of USB memory stick can carry it with huge amount of data freely like a tote bag and connect it to personal computers in an office and home. For enhanced security of the memory stick, recently USB memory stick having fingerprint authentication system is going sale. There are two types of the USB memory stick for the specialized market. The first type of the USB memory stick obtains fingerprint of the user by a sensor on the memory stick and sends information related to the obtained fingerprint to application software installed into the personal computers in order to register the fingerprint information in the personal computers for the fingerprint authentication. After registering it in the personal computer, when the USB memory stick is connected to it and sends to it new fingerprint information obtained by the sensor, the personal computer (PC) executes the application software in order to determine if the new finger print information corresponds with the registered fingerprint information for the fingerprint authentication.

The second type of the USB memory stick has a microprocessor and application software for the fingerprint authentication therein. The second type of the USB memory stick obtains fingerprint of the user by a sensor on the memory stick and registers the fingerprint information therein. After registering it in the USB memory stick, when the USB memory stick is connected to the personal computer, the microprocessor executes the application software in order to determine if the new fingerprint information obtained by the sensor corresponds with the registered fingerprint information for the fingerprint authentication. The second type of the USB memory stick has more higher security system than the first type of the USB memory stick, since the second type of the USB memory stick does not send the fingerprint information outside of the stick and sends only a result of the fingerprint authentication to the personal computer.

Recently it has been necessary to connect the USB memory stick to MFP (Multi Function Peripheral) in order to print documents stored in the USB memory stick or store scanned documents into the USB memory stick. Generally MFP is shared in an office and used to process many confidential information.

However, under the situation, if strangers connect the USB memory stick into MFP in the office, MFP cannot prevent the storing of the confidential information into the USB memory stick and the printing of the confidential information stored in the USB memory stick. Even though the USB memory stick having a fingerprint authentication system is connected into MFP, MFP cannot recognize that the USB memory stick has the authentication system.

### SUMMARY OF THE INVENTION

The present invention has been made in order to solve at least one of the problems described above. According to an aspect of the present invention, there is a memory management software to be executed in print control device connectable via a network to an information processing device that sends an instruction and data thereto. The software includes: a step of receiving an activation code from a detachable memory connected to the print control device; a step of activating an application software installed in the print control device in case that the activation code in the memory is associated with an activation code stored in a data file installed in the print control device; wherein the print control device is able to access to the memory by activating the application software.

According to another aspect of the present invention, there is a print control device connectable via a network to an information processing device that sends an instruction and data thereto. The print control device includes: a receiver for receiving an activation code from a detachable memory connected to the print control device; and a controller for activating an application software installed in the print control device in case that the activation code in the memory is associated with an activation code stored in a data file installed in the print control device; wherein the print control device is able to access to the memory by activating the application software.

According to another aspect of the present invention, there is a memory management method of print control device connectable via a network to an information processing device that sends an instruction and data thereto. The memory management method includes: a step of receiving an activation code from a detachable memory connected to the print control device; a step of activating an application software installed in the print control device in case that the activation code in the memory is associated with an activation code stored in a data file installed in the print control device; wherein the print control device is able to access to the memory by activating the application software.

Other features and advantages of the present invention will be apparent from the following description taken in conjunction with the accompanying drawings, in which like reference characters designate the same or similar parts throughout thereof.

### BRIEF DESCRIPTION OF THE DRAWINGS

Fig. 1 illustrates relationship between the information processing devices (client PC and license management server) and print control device (MFP) on the network according to an embodiment of the present invention.

Fig. 2 is a block diagram illustrating a schematic configuration of a memory management system including one of the information processing devices according to an embodiment of the present invention.

Fig. 3 is a flowchart illustrating an issuing process of the activation code to be executed in the information processing device (LMS 3).

Fig. 4 is a flowchart illustrating a memory management process to be executed in the print control device (MFP 6).

Fig. 5 is a diagram showing an entry window for license access number to be displayed on a display of the information processing device (Client PC 1).

Fig. 6 is a diagram showing an entry window for device serial number to be displayed on a display of the information processing device (Client PC 1).

### DETAILED DESCRIPTION OF THE EMBODIMENTS

A memory management software, a print control device and a memory management method of the print control device according to the present embodiment enable accessing to a detachable memory connected to the print control device by activating an application software installed in the print control device.

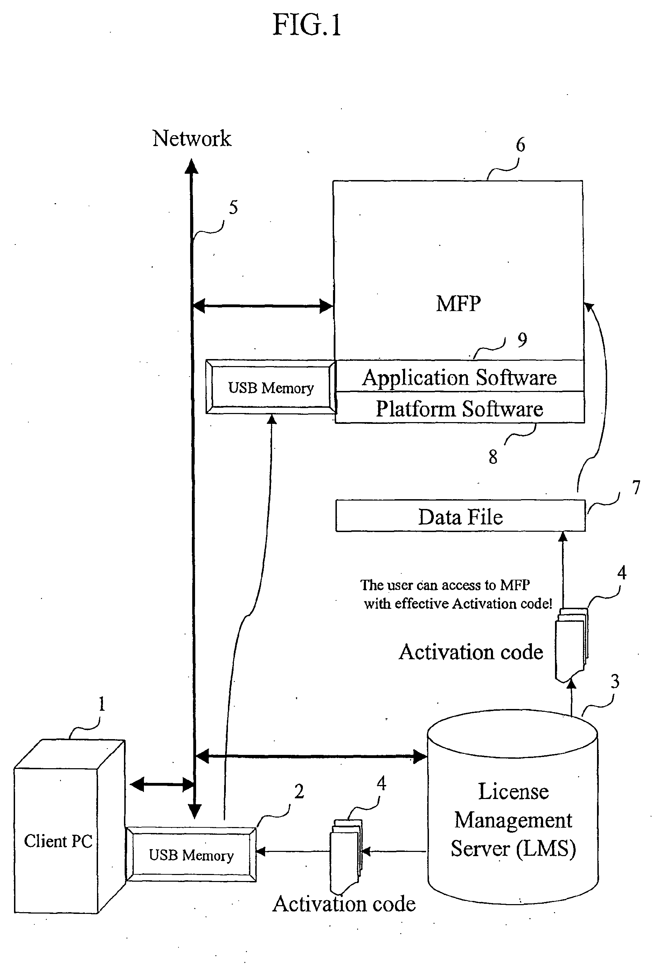

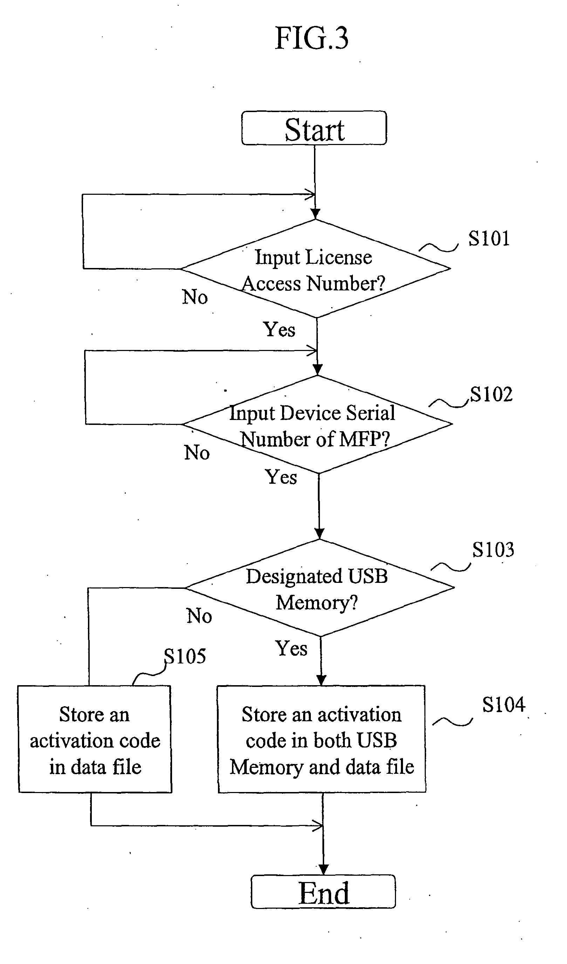

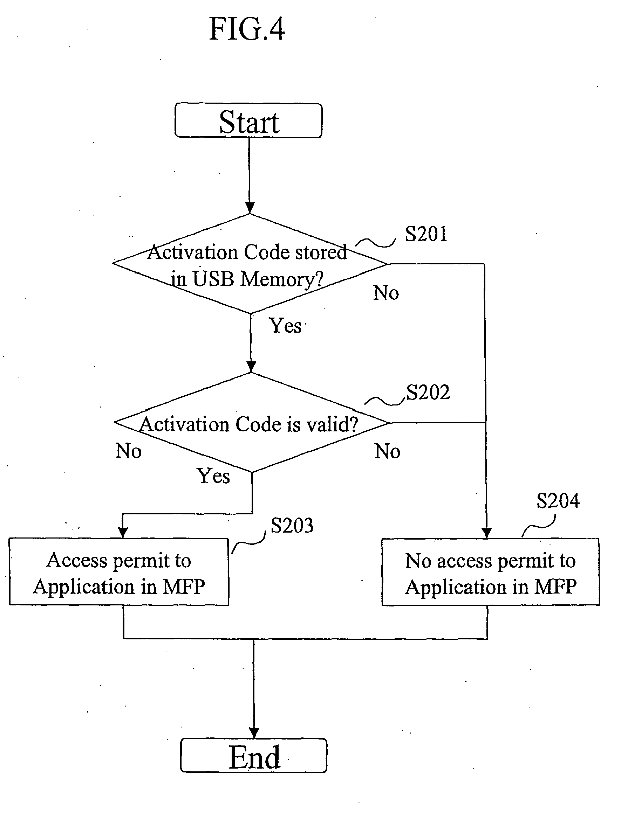

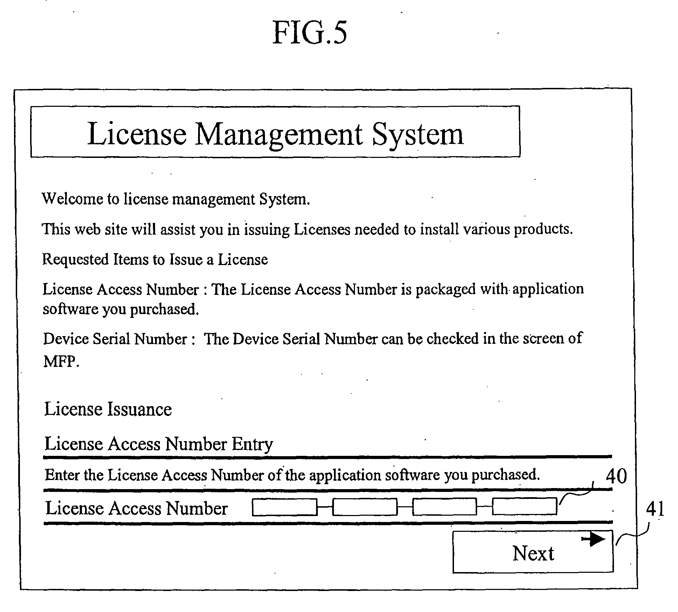

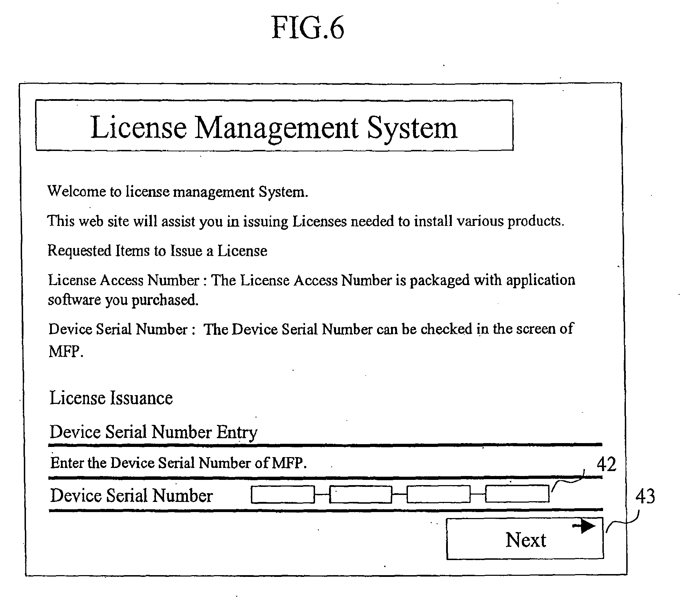

In the following, a detailed description will be given of embodiments of the present invention with reference to the accompanied drawings. Fig. 1 illustrates relationship between the information processing devices (personal computers) and print control device (MFP) on the network according to an embodiment of the present invention. In Fig.1, reference numeral 1 denotes a Client Personal Computer (information processing device) and includes at least one USB connector to connect a USB memory stick 2. Also, reference numeral 3 denotes License Management Server (information processing device) and includes at least license management software issuing an activation code 4 via a network 5. The license management software shown in Fig.3 is stored in LMS 3. The activation code 4 is stored in USB memory stick 2 to be used in Client PC 1 and also is stored in data file 7 to be used in MFP 6. The activation code 4 may be sent to Client PC 1 and/or MFP 6 by an email via network 5. MFP 6 has platform software 8 and executes installed application software 9 based on platform software. In order to execute application software 9, it is necessary to install data file 7 having effective activation code 4 into MFP 6. And also MFP 6 stores memory management software shown in Fig.4. Client PC 1 stores entry windows shown in Fig.5 and Fig.6.

A user of USB memory stick 2 connects USB memory stick 2 to Client PC 1 and access into license management server (LMS) 3 in order to store activation code 4 in USB memory stick 2. Also LMS 3 issues same activation code and store it in data file 7 like a CD DISK memory. The activation code 4 may be sent to Client PC 1 and/or MFP 6 by an e-mail via network 5. When USB memory stick 2 connected to MFP 6 has same activation code 4 as one of data file 7, MFP 6 activates application software 9 to access to USB memory stick 2.

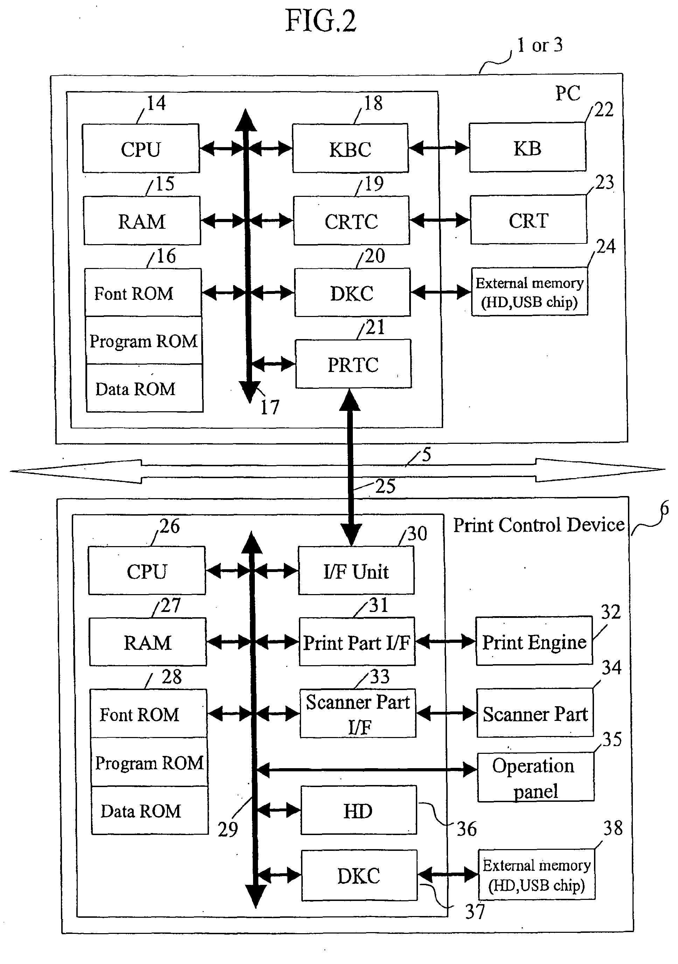

Fig. 2 is a block diagram illustrating a schematic configuration of a memory management system including one of the information processing devices according to an embodiment of the present invention. In this regard, although a memory management system is shown as an embodiment, the present invention is not limited to this. The present invention is applied to a network system in which processing is performed by connecting through a network such as a LAN (local area network), WAN (wide area network), etc., as long as it is an environment in which the memory management software can be executed.

In Fig. 2, reference numeral 1 denotes one of personal computers (information processing devices 1 and 3) shown in Fig.1, and includes a CPU (central processing unit) 14 which executes processing on documents including a combination of graphics, images, characters, tables (including spreadsheets), etc., based on a document processing program, etc., stored in a program ROM of a ROM (read only memory) 16 or an external memory 24 (HD, USB chip and so on). The CPU 14 integrally controls each of the devices connected to a system bus 17. Also, the program ROM of the ROM 16 or the external memory 24 stores an operating system (OS), which is the control program of the CPU 14 and an application software issuing activation code 4 shown in Fig.3, etc., a font ROM of the ROM 16 or the external memory 24 stores font data, etc., to be used for the document processing described above, and a data ROM of the ROM 16 or the external memory 24 stores various data to be used for the above-described document processing, etc. Reference numeral 15 denotes a RAM (random access memory), and functions as a main memory, a work area, etc., of the CPU 14.

Reference numeral 18 is a keyboard controller (KBC), and controls the input from a keyboard 22 and an unillustrated pointing device. Reference numeral 19 is a CRT controller (CRTC), and controls the display of a CRT (cathode ray tube) display 23. The user selects printable data (documents and/or folder) and control icons displayed on CRT 23 to input license access number 40 shown in Fig.5 and device serial number 42 shown in Fig. 6 by using keyboard 22 or the pointing device. The activation code 4 includes at least license access number 40 and device serial number 42. Reference numeral 20 is a disk controller (DKC), and controls the access to and from the external memory 24 such as a hard disk (HD), a USB memory stick 2, etc., which store a boot program, various applications including the application software issuing activation code 4, font data, user files, edit files, etc.

Reference numeral 21 is a print controller (PRTC), which is connected to a print control device 6 through a predetermined bi-directional interface (interface) 25 via the network 5, and executes communication control processing with print control device 6. In this regard, CPU 26 executes, for example, outline-font expansion (rasterization) processing into a display information RAM, which is set in RAM 27, and provides WYSIWYG (what you see is what you get) on CRT 23. Also, CPU 26 opens various registered windows, and executes various data processing based on the commands instructed by an unillustrated mouse cursor, etc., on CRT 23.

In print control device 6, reference numeral 26 is a CPU. CPU 26 outputs an image signal as output information to a print part (printer engine) 31 connected to a system bus 29 based on the control program, etc., stored in a program ROM of a ROM 28 or the control program, etc., stored in HD 36. Also, the program ROM of the ROM 28 stores a control program (platform software 8 if HD 36 does not store it), etc., of the CPU 26. A font ROM of the ROM 28 stores font data, etc., to be used when the above-described output information is created. A data ROM of the ROM 28 stores information, etc., to be used in Client PC 1 when the print control device 6 does not have a hard disk (HD) 36, etc.

CPU 26 is capable of performing communication processing with Client PC 1 and/or LMS 3 through an I/F unit 30. Reference numeral 27 is a RAM which functions as a main memory, a work area, etc., of CPU 26, and the memory capacity thereof can be expanded by an optional RAM connected to an unillustrated expansion port. In this regard, the RAM 27 is used for an output information expansion area, environment data storage area, an NVRAM (Non-Volatile RAM), etc.

HD 36 stores font data, an emulation program, form data, data file 7, platform software 8, application software 9 and a memory management software shown in Fig.4 etc. Reference numeral 33 is a scanner part I/F and controls documents scanned by scanner part 34 (scanner engine). The scanned document may be printed by print engine 32 and sent to Client PC 1 by using a telephone line in a facsimile mode of print control device 6. The scanned document is stored into external memory 38 like USB memory stick 2. If a user select documents stored in USB memory stick 2, the documents are printed by print engine 32. Also, reference numeral 35 is an operation panel (part) to select documents to be printed or to be stored into USB memory stick 2. Reference numeral 37 is a disk controller (DKC), and controls the access to and from the external memory 38 such as a hard disk (HD) stick, a USB memory stick 2, etc., which store a boot program, various applications including data file 7, platform software 8, application software 9, font data, user files including data file 7 and a memory management software shown in Fig.4 etc.

Fig. 3 is a flowchart illustrating an issuing process of the activation code to be executed in LMS 3 (information processing device). If a user input predetermined URL (IP address) into web browser that Client PC 1 is running now, the application software shown in Fig.3 is executed in LMS 3 and window screens shown in Fig. 5 and 6 are displayed on CRT 23 of Client PC 1. If the user inputs license access number 40 on the screen and select next icon 41, the screen shown Fig.6 is displayed on CRT 23 of Client PC 1. And then if the user inputs device serial number 42 and select next icon 43, another screen not shown in this embodiment is displayed on CRT 23 of Client PC 1. The user designates locations and/or ways to store activation code 4 that LMS 3 issues. The user can store activation code 4 in to USB memory stick 2 and/or another memory medium for data file 7 and send it from LMS 3 to Client PC 1 and/or MFP 6 directly by a email via network 5.

CPU 14 in LMS 3 determines if license access number 40 is sent from Client PC 1 to LMS 3 in step 101. If Yes, CPU 14 in LMS 3 determines if device serial number 41 is sent from Client PC 1 to LMS 3 in step 102. If Yes, CPU 14 in LMS 3 issues activation code 4 and determines if USB memory stick 2 is designated to store activation code 4 in step 103. If No, CPU 14 in LMS 3 sends the issued activation code 4 to Client PC 1 to store it into a memory medium as data file 7. If Yes in step 103, CPU 14 in LMS 3 sends the issued activation code to Client PC 1 to store it in both USB memory stick 2 and a memory medium as data file 7. The memory medium is a medium rather than USB memory stick 2 and is connected to DKC 37 of MFP 6. If email address is designated by a user, CPU 14 sends the issued activation code 4 to the email address. And then the user stores it in USB memory 2 and the memory medium as data file 7 respectively. CPU 14 in LMS 3 may download activation code 4 to MFP via network 5 directly.

Fig. 4 is a flowchart illustrating a memory management process to be executed in MFP 6. In step 201, CPU 26 in MFP 6 determines if activation code 4 is stored in USB memory stick 2 connected to DKC 37 of MFP 6. If NO in step 201, CPU 26 in MFP 6 does not permit (activate) an application software 9 to access to USB memory stick 2 in step 204 and ends this flowchart. Under this situation, a user connected USB memory stick 2 to MFP 6 cannot store any scanned data into USB memory stick 2 and print any data stored in USB memory stick 2. If Yes in step 201, CPU 26 in MFP 6 receives activation code 4 from USB memory stick 2 to RAM 27 and determines if activation code 4 in RAM 27 is valid by comparing it with activation code 4 stored in data file 7 stored in RAM 27 or HD 36 or external memory 38 in step 202. In detailed, CPU 26 checks if license access number 40 and/or device serial number 41 in activation code 4 stored in USB memory stick 2 corresponds with license access number 40 and/or device serial number 41 in activation code 4 stored in data file 7. If CPU check both numbers in activation code 4, data security is enhanced. If Yes in step 203, CPU 26 in MFP 6 permits (activates) an application software 9 to access to USB memory stick 2 and ends this flowchart. Under this situation, the user connected USB memory stick 2 to MFP 6 can store scanned data into USB memory stick 2 and print data stored in USB memory stick 2. If No in step 202, CPU 26 in MFP 6 does not permit (activate) an application software 9 to access to USB memory stick 2 in step 204 and ends this flowchart.

In order to activate application software 9 on platform software 8, it is necessary to install data file having effective activation code 4 into MFP 6. Also, in order to activate application software 9 to access to USB memory stick 2 connected to MFP 6, it is necessary to connect to MFP 6 USB memory stick 2 having effective activation code 4. And both license access number 40 and device serial number 42 in activation code 4 are serial number. The license access number 40 is allocated to application software 9 installed into MFP 6. A purchaser of application software 9 can see the license access number 40 on package of application software 9. Also, the device serial number 42 is allocated to MFP 6 itself. A purchaser of MFP 6 can see the device serial number 42 on operation panel 35 of MFP 6. Under this system, therefore, data security on MFP 6 is enhanced and strangers (unauthorized person) in an office cannot use his or her USB memory stick 2 connected to MFP 6. LMS3 may modulate or encrypt the activation code 4 and provide it to USB memory or MFP6 in step 104 or 105. CPU 26 of MFP 6 decrypts it and execute step 202. If MFP 6 has a code exchange table, CPU 26 of MFP 6 uses it and execute step 202. Under this situation, it is not necessary that activation code 4 stored in USB memory 2 coincides with activation code 4 stored in the data file 7 to be provided to MFP 6. In step 202 it is sufficient that CPU 26 of MFP 6 determines if the activation code 4 stored in USB memory stick 2 is associated with the activation code 4 stored in the data file 7 to be provided to MFP 6.

Also, in the above-described embodiment, various functions are achieved by reading the programs for achieving the functions in Client PC 1, LMS 3 or MFP 6 into the memory (RAM) and the CPU executing these functions. However, the invention is not limited to this, and all of the processing or part of the functions may be achieved by dedicated hardware. Also, the above-described memory may be constituted by a non-volatile memory such as a magnetic optical disk unit, a flash memory, etc., a read-only recording medium such as a CD-ROM, etc., a volatile memory other than a RAM, or a computer-readable and writable recording medium by the combination of these.

Also, a program for achieving various processing functions in Client PC 1, LMS 3, MFP 6 may be recorded into a computer-readable recording medium, and the program code recorded in the recording medium may be read into a computer system, and each processing may be performed by executing the program code. In this regard, a "computer system" mentioned here includes an OS, hardware such as a peripheral device, etc.

Also, a "computer-readable recording medium" means a portable medium such as a flexible disk, a magnetic optical disk, a ROM, a CD-ROM, etc., and a storage device such as a hard disk contained in a computer system. Furthermore, a "computer-readable recording medium" includes a device for holding a program for a certain period of time such as an internal volatile memory (RAM) of a computer system to be a server or a client when the program is transmitted through a network such as the Internet, etc., and a communication line such as a telephone line, etc.

Also, the above-described program may be transmitted from a computer system storing the program in a storage device, etc., through a transmission medium, or may be transmitted to another computer system by a transmitted wave in the transmission medium. Here, a "transmission medium" for transmitting the program means a medium having an information transmission function such as a network (communication network), for example, the Internet, etc., and the communication line such as a telephone line, etc. Also, the above-described program may achieve part of the above-described functions. Furthermore, the program may achieve the above-described functions by combining with the program that is already recorded in a computer system, that is to say, the program may be a differential file (differential program).

Also, a program product such as a computer-readable recording medium which records the above-described program may be applied to an embodiment of the present invention. The above-described program, recording medium, a transmission medium, and the program product are included in the scope of the present invention. As described above, a detailed description has been given of the embodiments of the present invention with reference to the drawings. However, a specific structure is not limited to the embodiments, and a design, etc., are included within the spirit and scope of the present invention.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. A memory management software to be used in print control device (6) connectable via a network (5) to an information processing device (3) that sends an instruction and data thereto, the software comprising the steps of:
receiving an activation code (4) from a detachable memory (2) connected to the print control device (6); and
activating an application software (9) installed in the print control device (6) in case that the activation code (4) in the memory (2) is associated with an activation code (4) stored in a data file (7) installed in the print control device (6); wherein the print control device (6) is able to access to the memory (2) by activating the application software (9).

2. The software according to claim 1, wherein the activation code (4) is a license access number and/or device number.

3. The software according to claim 2, wherein the license access number is serial number and is allocated to the application software (9) installed into the print control device (6).

4. The software according to claim 2, wherein the device number is serial number and is allocated to the print control device (6).

5. The software according to claim 2, 3 or 4, wherein the activation code (4) is provided from a server (3) in case that a user inputs into the server (3) the license access number and the device number.

6. The software according to claim 5, wherein the server (3) stores the activation code (4) in the memory (2) and the data file (7).

7. The software according to any preceding claim, in case that both the application software (9) and the data file (7) are installed into the print control device (6), the print control device (5) is able to execute the application software (9).

8. The software according to any preceding claim, wherein the print control device (6) stores scanned data into the memory (2) after activating the application software (9).

9. The software according to any preceding claim, wherein the print control device (6) prints data in the memory (2) after activating the application software (9).

10. The software according to any preceding claim, wherein the software is stored in a memory medium and is executed in the print control device (6).

11. A print control device (6) connectable via a network (5) to an information processing device (3) that sends an instruction and data thereto, the print control device comprising:
a receiver for receiving an activation code (4) from a detachable memory (2) connected to the print control device (6); and
a controller for activating an application software (9) installed in the print control device (6) in case that the activation code (4) in the memory (2) is associated with an activation code (4) stored in a data file (7) installed in the print control device (6); wherein the print control device (6) is able to access to the memory (2) by activating the application software (9).

12. A memory management method of print control device (6) connectable via a network (5) to an information processing device (3) that sends an instruction and data thereto, the memory management method comprising the steps of:
receiving an activation code (4) from a detachable memory (2) connected to the print control device (6); and
activating an application software (9) installed in the print control device (6) in case that the activation code (4) in the memory (2) is associated with an activation code (4) stored in a data file (7) installed in the print control device (6); wherein the print control device (6) is able to access to the memory (2) by activating the application software (9).
